# EUROPEAN PATENT APPLICATION

(11) **EP 2 806 235 A1**
(43) Date of publication of application: **26.11.2014**
(21) Application number: 12863561.2
(22) Date of filing: 26.12.2012
(51) Int. Cl.: F25B 43/00, B01F 1/00, F24F 1/00, F25B 1/00, F25B 39/04

(54) **BUBBLE-REMOVAL DEVICE, OUTDOOR HEAT-EXCHANGE DEVICE, AND REFRIGERATION/AIR-CONDITIONING SYSTEM**

(30) Priority: 26.12.2011 JP 2011290662; 13.04.2012 WO PCT/JP2012/060161; 10.12.2012 WO PCT/JP2012/081963
(71) Applicant: Iwatsuki, Tadashi, Shizuoka 438-0111 (JP); Institute For Future Technology Co., Ltd., Tokyo 164-0003 (JP)
(72) Inventor: IWATSUKI, Tadashi, Shizuoka 438-0111 (JP)
(74) Representative: Hoffmann Eitle
(86) International application number: PCT/JP2012/083704
(87) International publication number: WO 2013/099972

(57) **Abstract**

To provide a bubble-removal device capable of removing vacuum bubbles existing in a refrigerant from the refrigerant.

A bubble-removal device 100 includes a main body 100a having a cylindrical barrel part 110a and end wall parts 110b, 110c that close both end parts of the barrel part 110a, and a pipe part extending along a center axis of the barrel part 110a, one end side of which is attached to the end wall part 110c, and the other end side of which is located inside the main body and extends toward the end wall part 110b, wherein in the main body 110, an opening H1 to introduce a refrigerant is formed and an inner surface of the barrel part 110a has a spiral groove 116 extending spirally relative to the center axis at least on the opening H1 side.

## Description

### Technical Field

The present invention relates to a bubble-removal device, an outdoor heat-exchange device, and a refrigeration/air-conditioning system.

### Background Art

Conventionally, there is known a refrigeration/air-conditioning system including an indoor heat exchanger (also called an evaporator), a compressor, an outdoor heat exchanger (also called a condenser), and an expansion valve (see Patent Literature 1). The indoor heat exchanger, the compressor, the outdoor heat exchanger, and the expansion valve are connected together by piping through which a refrigerant flows. Consequently, the refrigeration/air-conditioning system is configured as a closed system and the refrigerant circulates through the system while repeating phase transition between gas and liquid.

When an air conditioning system is operated as a cooling apparatus, an indoor heat exchanger functions as an evaporator and an outdoor heat exchanger functions as a condenser. The way the refrigerant changes in this case is explained. First, when the compressor operates, a refrigerant in a saturated vapor state at low temperature and low pressure is compressed by the compressor and changes into superheated vapor at high temperature and high pressure. Subsequently, the refrigerant in a superheated vapor state exchanges heat with an outside system in the condenser and changes into liquid at normal temperature and high pressure.

Subsequently, the refrigerant in a liquid state at normal temperature and high pressure expands by an expansion valve and changes into wet vapor at low temperature and low pressure. Next, the refrigerant in a wet vapor state at low temperature and low pressure absorbs heat of the outside system by exchanging heat with the outside system in the evaporator (indoor heat exchanger), evaporates completely, and changes into saturated vapor. By the refrigerant circulating through the refrigeration/air-conditioning system while changing as described above, the temperature in a room where the indoor heat exchanger (evaporator) is installed decreases and heat having changed into heat at high temperature and high pressure by the compressor is discharged to the outside of the room, and therefore, the temperature outside the room where the outdoor heat exchanger (condenser) is installed rises.

### Citation List

### Patent Literature

Patent Literature 1: Japanese Patent No. 3218289

### Summary of Invention

### Technical Problem

When a refrigerant changes from gas into liquid in a condenser, there is a case where the whole of the refrigerant does not change into liquid completely and bubbles remain in the liquefied refrigerant. There are various sizes of bubble, from a size that can be recognized visually to a size that is so small that it cannot be recognized visually. A very small-sized bubble is formed by gathering of a plurality of radicals (atoms not bonded as molecules) of compounds (for example, carbon, hydrogen, fluorine, chlorine) constituting the refrigerant and also called a "vacuum bubble".

The vacuum bubble is not in a state where atoms are bonded into molecules, and therefore, the vacuum bubble does not change into liquid even if cooled. If the vacuum bubble remains in the refrigerant, the expansion efficiency when the refrigerant passes through the expansion valve decreases and the operation efficiency of the refrigeration/air-conditioning system may decrease.

Therefore, an object of the present invention is to provide a bubble-removal device, an outdoor heat-exchange device, and a refrigeration/air-conditioning system capable of removing vacuum bubbles existing in a refrigerant from the refrigerant.

### Solution to Problem

A bubble-removal device according to an aspect of the present invention includes a main body having a cylindrical barrel part and a first and a second end wall part that close both end parts of the barrel part, and a pipe part extending along a center axis of the barrel part, one end side of which is attached to the first end wall part, and the other end side of which is located inside the main body and extends toward the second end wall part, wherein in the main body, an opening to introduce a liquid refrigerant is formed, and an inner surface of the barrel part is spaced from an outer peripheral surface of the pipe part so as to form a refrigerant flow passage, has a first spiral groove extending spirally relative to the center axis at least on the opening side, and exhibits an irregular surface on which projections and depressions are arranged side by side along the flow passage due to the presence of the first spiral groove.

In the bubble-removal device according to an aspect of the present invention, the inner surface of the barrel part has the first spiral groove extending spirally relative to the center axis at least on the opening side. When the liquid refrigerant including vacuum bubbles is introduced through the opening, the refrigerant flows through the flow passage while colliding with the first spiral groove that exists on the opening side of the barrel part. Because of that, a swirling flow of the refrigerant is formed inside the main body. The vacuum bubbles flowing accompanying the swirling flow of the refrigerant flow outward and are pushed to the inner surface of the barrel part. The inner surface of the barrel part has the first spiral groove, and therefore, the vacuum bubbles flow along the groove while in contact with the first spiral groove. In this process, break of the vacuum bubbles is promoted, which facilitates mixing of individual radicals with the liquid refrigerant. As a result, it is possible to break down and remove the vacuum bubbles existing in the refrigerant from the refrigerant.

The inner surface of the barrel part may have the first spiral groove extending spirally relative to the center axis across the full length of the barrel part. In this case, the vacuum bubbles remain in contact with the first spiral groove for a long period of time. Because of that, break of the vacuum bubbles and mixing of the vacuum bubbles with the refrigerant are more promoted.

A pitch of the first spiral groove on the opening side may be narrower than a pitch of the first spiral groove on a side distant from the opening.

If a full width of the first spiral groove in the center axis direction is taken to be L and a width of a part of the first spiral groove on the opening side where the pitch is narrower to be L1, L1/L ≥ 1/3 may hold.

The barrel part may include a cylindrical coil spring attached to an inner wall surface of the barrel part, and the first spiral groove may be formed by a gap of neighboring metal wires of the cylindrical coil spring. In this case, by using the cylindrical coil spring, it is possible to form the first spiral groove easily and at a low cost.

A section of the metal wire may be circular and a diameter of the metal wire may be 2 mm to 6 mm.

The opening may not face the one end of the pipe part. In this case, it becomes hard for the refrigerant to flow directly from the opening to the pipe part.

The opening may be formed on an outer peripheral edge side of the second end wall part, the pipe part may be located on the center axis, and the refrigerant introduced through the opening may flow along an inner peripheral surface of the barrel part, then may flow along the outer peripheral surface of the pipe part with a direction of the flow reversed by the first end wall part, and thereafter may flow out to the outside through the other end of the pipe part.

The bubble-removal device according to an aspect of the present invention further includes an inlet pipe part connected to the opening and having one end located inside the main body, the one end is inclined obliquely with respect to the axis of the inlet pipe part, a portion of the one end close to the barrel part may be shorter than a portion of the one end located on the center axis side of the barrel part. In this case, the one end of the inlet pipe part faces toward the inner surface side of the barrel part. For that reason, the refrigerant flowing into the main body from the one end of the inlet pipe part flows mainly toward the first spiral groove. Accordingly, the swirling flow of the refrigerant is more likely to be formed inside the main body. As a result, it is possible to further promote the decomposition and removal of the vacuum bubbles existing in the refrigerant.

The opening may be formed on the barrel part at the first end wall part side, the pipe part may be located on the center axis, and the refrigerant introduced through the opening may flow between the inner peripheral surface of the barrel part and the outer peripheral surface of the pipe part and may flow out to the outside through the other end of the pipe part after the direction of the flow is reversed by the second end wall part.

The outer peripheral surface of the pipe part may have a second spiral groove extending spirally relative to the center axis. In this case, the refrigerant flows while in contact with the second spiral groove, which further facilitates forming of a swirling flow. Because of that, even in the case where there are vacuum bubbles that could not be removed by the first spiral groove, when the refrigerant including vacuum bubbles flows to the outer peripheral surface of the pipe part, it becomes easy for the vacuum bubbles to move outward (toward the first spiral groove side). As a result, the vacuum bubbles are broken down by the first spiral groove again, which allows removal of the vacuum bubbles from the refrigerant more reliably.

The second spiral groove may be formed by a male screw. In this case, it is possible to form the second spiral groove easily and at a low cost.

Inside the pipe part, there may be provided at least one throttling member having a flow passage area smaller than that of the pipe part. In this case, pressure at a downstream side of the throttling member becomes lower than that at an upstream side of the throttling member. Because of that, force from the refrigerant acting on an aggregate of radicals formed as vacuum bubbles becomes relatively low, and therefore, which facilitates break of the vacuum bubbles. As a result, it is possible to further promote the removal of the vacuum bubbles from the refrigerant.

The throttling member may be a flat plate having at least one through-hole penetrating in a thickness direction.

The bubble-removal device according to an aspect of the present invention may further include an auxiliary pipe part which is disposed inside the main body so that one end is located near a first end wall part and the other end is directed toward the other end of the pipe part. Incidentally, since the one end of the barrel part is closed by the first end wall part, in the vicinity of the first end wall part, the refrigerant after the vacuum bubbles are decomposed and removed by the first spiral groove, that is, the almost completely liquefied refrigerant is likely to be accumulated. Since one end of the auxiliary pipe part is located near the first end wall part in which a liquid pool of the refrigerant occurs, and the other end of the auxiliary pipe part is directed towards the other end of the pipe part, it is possible to cause the refrigerant becoming the liquid pool to directly flow into the pipe part by the auxiliary pipe part. As a result, it is possible to cause the almost completely liquefied refrigerant to efficiently flow to the downstream side through the auxiliary pipe part and the pipe part.

An outdoor heat-exchange device according to another aspect of the present invention includes a heat exchanger that performs heat exchange between an outside system and a refrigerant, and the bubble-removal device described above, wherein a refrigerant flows in and out between the heat exchanger and the bubble-removal device. The outdoor heat-exchange device according to the present invention includes the bubble-removal device described above, and therefore, it is possible to break down and remove vacuum bubbles existing in a refrigerant from the refrigerant.

An outdoor heat-exchange device according to another aspect of the present invention may be provided with a plurality of bubble-removal devices, the pipe part of the first bubble-removal device of a plurality of bubble-removal devices may be in communication with the pipe part of the second bubble-removal device of the plurality of bubble-removal devices, or an opening of the first bubble-removal device may be in communication with the opening of the second bubble-removal device. In this case, even if the refrigerant flows into the first or second bubble-removal device either in a forward direction or in a reverse direction, it is possible to decompose and remove the vacuum bubbles existing in the refrigerant, by the action of the first spiral groove included in the first or second bubble-removal device. For that reason, it is possible to preferably use the outdoor heat-exchange device according to another aspect of the present invention in the refrigeration/air-conditioning system in which the forward and the reverse in the direction of circulation of the refrigerant can rotate in order to function as heating or cooling.

An outdoor heat-exchange device according to another aspect of the present invention includes a heat exchange part that performs heat exchange between an outside system and a refrigerant, and a bubble removing part between which and the heat exchange part a refrigerant flows in and out, wherein the bubble removing part has a main body having a cylindrical barrel part and a first and a second end wall part that close both end parts of the barrel part, and a pipe part extending along a center axis of the barrel part, one end side of which is attached to the first end wall part, and the other end side of which is located inside the main body and extends toward the second end wall part, wherein in the main body, an opening to introduce a liquid refrigerant is formed, and an inner surface of the barrel part is spaced from an outer peripheral surface of the pipe part so as to form a refrigerant flow passage, has a first spiral groove extending spirally relative to the center axis at least on the opening side, and exhibits an irregular surface on which projections and depressions are arranged side by side along the flow passage due to the presence of the first spiral groove.

In the outdoor heat-exchange device according to another aspect of the present invention, the bubble removing part has the cylindrical barrel part and the inner surface of the barrel part has the first spiral groove extending spirally relative to the center axis at least on the opening side. When the liquid refrigerant including vacuum bubbles is introduced through the opening, the refrigerant flows through the flow passage while colliding with the first spiral groove that exists on the opening side of the barrel part. Because of that, a swirling flow of the refrigerant is formed inside the main body of the bubble removing part. The vacuum bubbles flowing accompanying the swirling flow of the refrigerant flows outward and are pushed to the inner surface of the barrel part. The inner surface of the barrel part has the first spiral groove, and therefore, the vacuum bubbles flow along the groove while in contact with the first spiral groove. In this process, break of the vacuum bubbles is promoted, which facilitates mixing of individual radicals with the refrigerant. As a result, it is possible to break down and remove the vacuum bubbles existing in the refrigerant from the refrigerant.

The inner surface of the barrel part may have the first spiral groove extending spirally relative to the center axis across the full length of the barrel part. In this case, the vacuum bubbles remain in contact with the first spiral groove for a long period of time. Because of that, break of the vacuum bubbles and mixing of the vacuum bubbles with the refrigerant are more promoted.

A pitch of the first spiral groove on the opening side may be narrower than a pitch of the first spiral groove on a side distant from the opening.

If a full width of the first spiral groove in the center axis direction is taken to be L and a width of a part of the first spiral groove on the opening side where the pitch is narrow to be L1, L1/L ≥ 1/3 may hold.

The barrel part may include a cylindrical coil spring attached to an inner wall surface of the barrel part, and the first spiral groove may be formed by a gap of neighboring metal wires of the cylindrical coil spring. In this case, by using the cylindrical coil spring, it is possible to form the first spiral groove easily and at a low cost.

A section of the metal wire may be circular and a diameter of the metal wire may be 2 mm to 6 mm.

The opening may not face the one end of the pipe part. In this case, it becomes hard for the refrigerant to flow directly from the opening to the pipe part.

The opening may be formed on an outer peripheral edge side of the second end wall part, the pipe part may be located on the center axis, and the refrigerant introduced through the opening may flow along an inner peripheral surface of the barrel part, then may flow along the outer peripheral surface of the pipe part with a direction of the flow reversed by the first end wall part, and thereafter may flow out to the outside through the other end of the pipe part.

The opening may be formed on the first end wall part side of the barrel part, the pipe part may be located on the center axis, and the refrigerant introduced through the opening may flow between the inner peripheral surface of the barrel part and the outer peripheral surface of the pipe part and may flow out to the outside through the other end of the pipe part after the direction of the flow is reversed by the second end wall part.

Furthermore, the bubble removing part may be further provided with an inlet pipe part connected to the opening and having one end located inside the main body, one end may be inclined obliquely with respect to the axis of the inlet pipe part, and a portion of the one end close to the barrel part may be shorter than the portion of the one end located on the center axis side of the barrel part. In this case, the one end of the inlet pipe part is directed toward the inner surface side of the barrel part. Therefore, the refrigerant flowing into the main body from the one end of the inlet pipe part flows mainly toward the first spiral groove. Accordingly, the swirling flow of the refrigerant is more likely to be formed inside the main body. As a result, it is possible to promote the decomposition and removal of the vacuum bubbles existing in the refrigerant.

The outer peripheral surface of the pipe part may have a second spiral groove extending spirally relative to the center axis. In this case, the refrigerant flows while in contact with the second spiral groove, and therefore, which facilitates forming of a swirling flow. Because of that, even in the case where there are vacuum bubbles that could not be removed by the first spiral groove, when the refrigerant including the vacuum bubbles flows to the outer peripheral surface of the pipe part, it becomes easy for the vacuum bubbles to move outward (toward the first spiral groove side). As a result, the vacuum bubbles are broken down by the first spiral groove again, which allows removal of the vacuum bubbles from the refrigerant more reliably.

The second spiral groove may be formed by a male screw. In this case, it is possible to form the second spiral groove easily and at a low cost.

Inside the pipe part, there may be provided at least one throttling member having a flow passage area smaller than that of the pipe part. In this case, pressure at a downstream side of the throttling member becomes lower than that at an upstream side of the throttling member. Because of that, force from the refrigerant acting on an aggregate of radicals formed as vacuum bubbles becomes relatively low, and therefore, which facilitates break of the vacuum bubbles. As a result, it is possible to further promote the removal of the vacuum bubbles from the refrigerant.

The throttling member may be a flat plate having at least one through-hole penetrating in a thickness direction.

The bubble removing part may be further provided with an auxiliary pipe part which is disposed inside the main body so that one end is located near the first end wall part and the other end is directed toward the other end of the pipe part. Incidentally, since the one end of the barrel part is closed by the first end wall part, in the vicinity of the first end wall part, the refrigerant after the vacuum bubbles are decomposed and removed by the first spiral groove, that is, the almost completely liquefied refrigerant is likely to be accumulated. Since one end of the auxiliary pipe part is located near the first end wall part in which the liquid pool of the refrigerant occurs, and the other end of the auxiliary pipe part is directed towards the other end of the pipe part, it is possible to cause the refrigerant becoming the liquid pool to directly flow into the pipe part by the auxiliary pipe part. As a result, it is possible to cause the almost completely liquefied refrigerant to efficiently flow to the downstream side through the auxiliary pipe part and the pipe part.

An outdoor heat-exchange device according to another aspect of the present invention may be provided with a plurality of bubble removing parts, the pipe part of the first bubble-removal part of the plurality of bubble removing parts may be in communication with the pipe part of the second bubble-removal part of the plurality of bubble-removal parts, or an opening of the first bubble-removal part may be in communication with the opening of the second bubble-removal part. In this case, even if the refrigerant flows into the first or second bubble-removal part either in a forward direction or in a reverse direction, it is possible to decompose and remove the vacuum bubbles existing in the refrigerant, by the action of the first spiral groove included in the first or second bubble-removal part. For that reason, it is possible to preferably use the outdoor heat-exchange device according to another aspect of the present invention in the refrigeration/air-conditioning system in which the forward and the reverse in the direction of circulation of the refrigerant can rotate in order to function as heating or cooling.

In a refrigeration/air-conditioning system according to another aspect of the present invention, a closed system through which a refrigerant circulates is configured by connecting an indoor heat-exchange device, a compressor, the outdoor heat-exchange device described above, and an expansion device in this order by piping. The refrigeration/air-conditioning system according to another aspect of the present invention includes the outdoor heat-exchange device described above, and therefore, it is possible to break down and remove vacuum bubbles existing in a refrigerant from the refrigerant. Because of that, it is possible to increase operation efficiency of the refrigeration/air-conditioning system and contribute to energy saving considerably.

### Advantageous Effects of Invention

According to the present invention, it is possible to provide a bubble-removal device, an outdoor heat-exchange device, and a refrigeration/air-conditioning system capable of removing vacuum bubbles existing in a refrigerant from the refrigerant.

### Brief Description of Drawings

Fig. 1 is a diagram showing a case where a refrigeration/air-conditioning system according to the present embodiment is used as a cooling apparatus.
Fig. 2 is a diagram showing a case where the refrigeration/air-conditioning system according to the present embodiment is used as a heating apparatus.
Fig. 3(a) is a section view showing a bubble-removal device according to the present embodiment and Fig. 3(b) is a side view when the bubble-removal device according to the present embodiment is viewed in a center axis direction.
Fig. 4(a) is a section view showing a bubble-removal device according to another embodiment and Fig. 4(b) is a side view when the bubble-removal device according to another embodiment is viewed in a center axis direction.
Fig. 5(a) is a section view showing a bubble-removal device according to still another embodiment and Fig. 5(b) is a side view when the bubble-removal device according to still another embodiment is viewed in a center axis direction.
Fig. 6(a) is a section view showing a bubble-removal device according to still another embodiment and Fig. 6(b) is a view when a throttling member in Fig. 6A is viewed in a center axis direction.
Fig. 7 is a cross-sectional view illustrating a bubble-removal device according to still another embodiment.
Fig. 8 is a cross-sectional view illustrating a bubble-removal device according to still another embodiment.

### Description of Embodiments

Preferred embodiments of a refrigeration/air-conditioning system 1 according to the present invention will be described referring to the drawings. In the description, the same element or the element with the same function will be designated with the same code, and redundant explanations will be omitted.

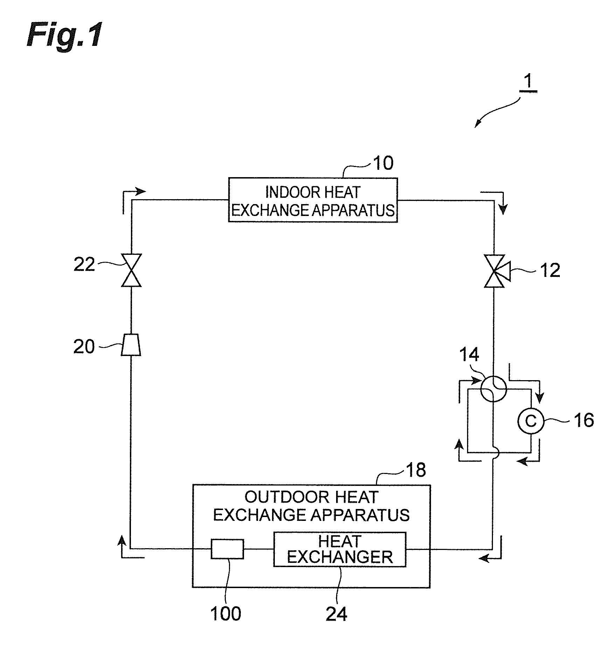

The refrigeration/air-conditioning system 1 is used for domestic use or professional use as an air conditioner, a refrigerating unit, or a freezer unit. The air conditioner includes a room air conditioner and an automotive air conditioner, for example. Referring to Fig. 1, the refrigeration/air-conditioning system 1 includes an indoor heat-exchange device 10, a three-way valve 12, a four-way valve 14, a compressor 16, an outdoor heat-exchange device 18, a capillary tube 20 and a two-way valve 22.

The indoor heat-exchange device 10, the three-way valve 12, the four-way valve 14, the compressor 16, the outdoor heat-exchange device 18, the capillary tube 20 and the two-way valve 22 are connected in this order by piping so that a refrigerant circulates therethrough. For this, the refrigeration/air-conditioning system 1 is configured as a closed system through which the refrigerant circulates.

For example, the kind of refrigerant includes CFC, HCFC, HCF or other refrigerant mixture. The CFC includes R-11, R-12, R-13, R-114, R-115 and R-502, for example. The HCFC includes R-22, R-123, R-123a, R-124, R-141b, R-142b, R-225aa, R-225ba, R-225bb, R-225ca, R-225cb, R-225cc, R-401A, R-401B, R-401C, R-408A, R409A and R-409B, for example. The HCF includes R-23, R-32, R-125, R-134a, R-152a, R-227ea, R-236fa, R-245cb, R-R-245ca, R-245fa, R-404A, R-407A, R-407B, R-407C, R-407D, R-407E, R-410A, R-410B, R-413a and R-507A, for example. The other refrigerant mixture includes R-14, R-116, R-218, R-245cb, R-245mc, R-290, R-402A, R-402B, R-403A, R-403B, R-405A, R-406, R-411A, R-411B, R-412A, R-508A, R-508B, R-509A, R-600, R-600a, R-702, R-704, R-717, R-718, R-720, R-728, R-740, R-732, R-744, R-744A, R-764, R-1114, R-1270 and R-C318, for example.

The indoor heat-exchange device 10 is provided inside the room where cooling, heating, or freezing is performed. The indoor heat-exchange device 10 includes a not shown heat exchanger which performs heat exchange between the refrigerant flowing in the heat exchanger and inside of the room (outside system of the refrigeration/air-conditioning system 1) so as to adjust an indoor temperature.

The four-way valve 14 switches the refrigerant flow direction between forward and reverse so that the operation state of the refrigeration/air-conditioning system 1 is changed to cooling or heating. The compressor 16 compresses the refrigerant to bring it into a high temperature and high pressure state.

The outdoor heat-exchange device 18 is provided in the space (for example, outdoor) different from the indoor space where the indoor heat-exchange device 10 is provided. The outdoor heat-exchange device 18 includes a heat exchanger 24 and a bubble-removal device 100. The heat exchanger 24 performs heat exchange between the refrigerant flowing in the heat exchanger 24 and the space (outside system of the refrigeration/air-conditioning system 1).

The bubble-removal device 100 includes a main body 110 and pipe parts 112 and 114. The main body 110 includes a barrel part 110a, and a pair of end wall parts 110b and 110c for closing both end parts of the barrel part 110a.

The barrel part 110a includes a cylindrical tube 110d and a cylindrical coil spring 110e. For example, the length of the tube 110d may be set to approximately 15 cm, and an inner diameter of the tube 110d may be set to approximately 8.5 cm. The cylindrical coil spring 110e is attached to an inner wall surface of the tube 110d. The inner surface of the barrel part 110a has a spiral groove 116 that spirally extends relative to a center axis of the barrel part 110a (hereinafter referred to as "center axis".) That is, in the present embodiment, the spiral groove 116 is formed by a gap of neighboring metal wires of the cylindrical coil spring 110e.

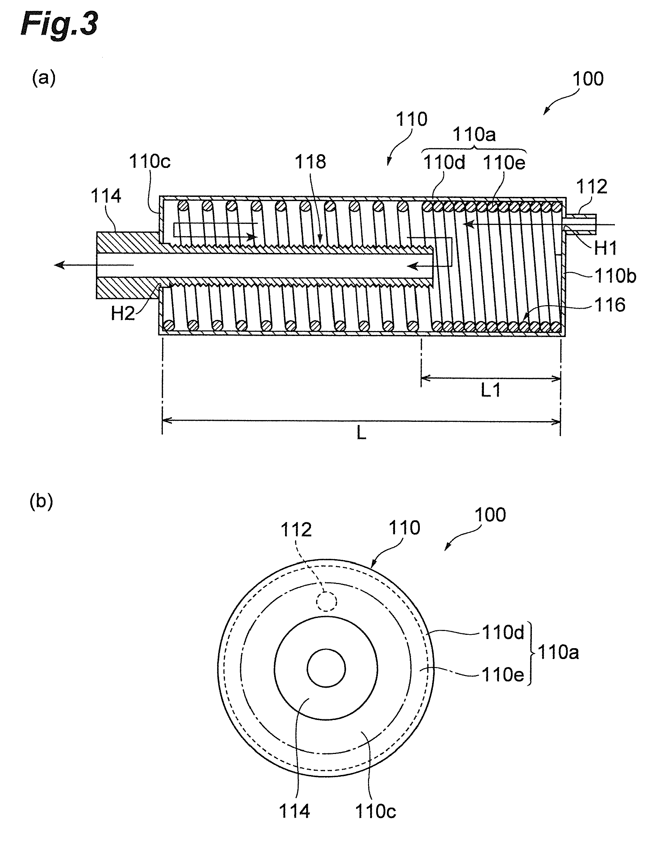

As shown in Figs. 3, a section of the metal wire is circular. A diameter of the metal wire may be set to approximately 2 mm to 6 mm. Especially, it may be set to approximately 4 mm. The inner surface of the barrel part 110a (spiral groove 116) is spaced from the outer peripheral surface of the pipe part 114. A flow passage through which the refrigerant flows is formed between the inner surface of the barrel part 110a and the outer peripheral surface of the pipe part 114. The inner surface of the barrel part 110a exhibits an irregular surface on which projections and depressions are arranged side by side along the flow passage (in a direction facing the end wall parts 110b and 110c) due to the presence of the spiral groove 116.

In the present embodiment, the full length of the cylindrical coil spring 110e is substantially equal to the full length of the tube 110d. Accordingly, the spiral groove 116 exists across the full length of the barrel part 110a. As shown in Figs. 3, in the present embodiment, a pitch of the spiral groove 116 on the side of the pipe part 112 is narrower than a pitch of the spiral groove 116 on the side distant from the pipe part 112 (on the side of the pipe part 114). Assuming that a full width of the spiral groove 116 (cylindrical coil spring 110e) in the center axis direction is L, and a width of a part of the spiral groove 116 on the side of the pipe part 112 where the pitch is narrower is L1, L1/L ≥ 1/3 may hold. Alternatively, 1/3 ≤ L1/L < 2/3 or 1/3 ≤ L1/L ≤ 1/2 may hold.

Each of the end wall parts 110b and 110c has a circular plate shape. An opening H1 is formed in the end wall part 110b on the outer peripheral edge side. The pipe part 112 is attached to the end wall part 110b so as to communicate with the opening H1. An opening H2 is formed around the center of the end wall part 110c. The pipe part 114 is attached to the end wall part 110c so that one end thereof is located inside the main body 110 (inside the barrel part 110a) while being inserted into the opening H2. Accordingly, the opening H1 (pipe part 112) and the opening H2 (pipe part 114) do not face each other when seen in the center axis direction.

A male screw is formed in a part on the outer peripheral surface of the pipe part 114, which is located inside the main body 110 (inside the barrel part 110a). Accordingly, a spiral groove 118 that spirally extends relative to the center axis is formed on the outer peripheral surface of the pipe part 114. Winding direction of the spiral groove 118 of the pipe part 114 is the same as that of the cylindrical coil spring 110e.

Referring back to Fig. 1, the capillary tube 20 is used to cause adiabatic expansion in the refrigerant so that a part of the refrigerant is changed from liquid into gas, and functions equivalently as the expansion valve. To this end, the section area (flow passage area) of the capillary tube 20 is smaller than that (flow passage area) of the other piping.

Subsequently, operation of the above-structured refrigeration/air-conditioning system 1 serving as the cooling apparatus will be described referring to Figs. 1 to 3. In this case, the heat exchanger of the indoor heat-exchange device 10 functions as an evaporator, and the heat exchanger 24 of the outdoor heat-exchange device 18 functions as a condenser.

The compressor 16 is operated to compress the refrigerant in the low temperature and low pressure saturated vapor state so as to change the state to the high temperature and high pressure superheated vapor state. Then the refrigerant in the superheated vapor state is subjected to heat exchange with the outside system by the heat exchanger 24 of the outdoor heat-exchange device 18 so as to be changed into liquid in the normal temperature and high pressure state. On this occasion, the entire refrigerant is sometimes not changed into the liquid completely, resulting in vacuum bubbles in the liquid refrigerant. The liquid refrigerant which contains the vacuum bubbles flows into the bubble-removal device 100 of the outdoor heat-exchange device 18 through the pipe part 112 (opening H1).

The refrigerant, when flowing into the bubble-removal device 100, flows while colliding with the spiral groove 116. As a result, a swirling flow of the refrigerant is formed in the main body 110. The vacuum bubbles that flow accompanying the refrigerant swirling flow move outward, and are pushed to the inner surface of the barrel part 110a. Since the spiral groove 116 is formed on the inner surface of the barrel part 110a, the vacuum bubbles flow along the groove 116 while in contact therewith. In this process, break of the vacuum bubbles is promoted so that the respective radicals are easily mixed with the liquid refrigerant.

The refrigerant flowing along the spiral groove 116 on the inner surface of the barrel part 110a impinges against the end wall part 110c, by which the flowing direction is reversed. It then flows toward the end wall part 110b along the outer peripheral surface of the pipe part 114. That is, the refrigerant flows in contact with the spiral groove 118, and thus, the swirling flow is generated also by the spiral groove 118. Even if there exist the vacuum bubbles which could not be broken down and removed by the spiral groove 116, they are likely to move outward (toward the spiral groove 116) when the refrigerant that contains the vacuum bubbles reaches the outer peripheral surface of the pipe part 114. As a result, the vacuum bubbles are broken down by the spiral groove 116 again, which ensures break and removal of the vacuum bubbles from the refrigerant.

The refrigerant flows to the end part of the pipe part 114 in the main body 110, and then further flows from the opening of the end part into the pipe part 114. This allows the vacuum bubbles to be removed, and the refrigerant in the normal temperature and high pressure liquid state flows out from the pipe part 114 (opening H2) (see arrow shown in Fig. 3).

The refrigerant in the normal temperature and high pressure liquid state is expanded by the capillary tube 20 into the moist vapor in the low temperature and low pressure state. Then the refrigerant in the low temperature and low pressure moist vapor state is subjected to the heat exchange with the outside system by the heat exchanger of the indoor heat-exchange device 10 so that heat of the outside system is absorbed. It is then completely evaporated, and changed into the saturated vapor.

In this way, the refrigerant flows through the compressor 16, the four-way valve 14, the outdoor heat-exchange device 18 (heat exchanger 24, bubble-removal device 100), the capillary tube 20, the two-way valve 22, the indoor heat-exchange device 10, the three-way valve 12 and the four-way valve 14 in this order, and circulates in the refrigeration/air-conditioning system 1. As the refrigerant circulates in the refrigeration/air-conditioning system 1 while being changed as described above, the temperature inside the room where the evaporator (indoor heat-exchange device 10) is installed is decreased, and the temperature outside the room where the condenser (outdoor heat-exchange device 18) is installed is increased.

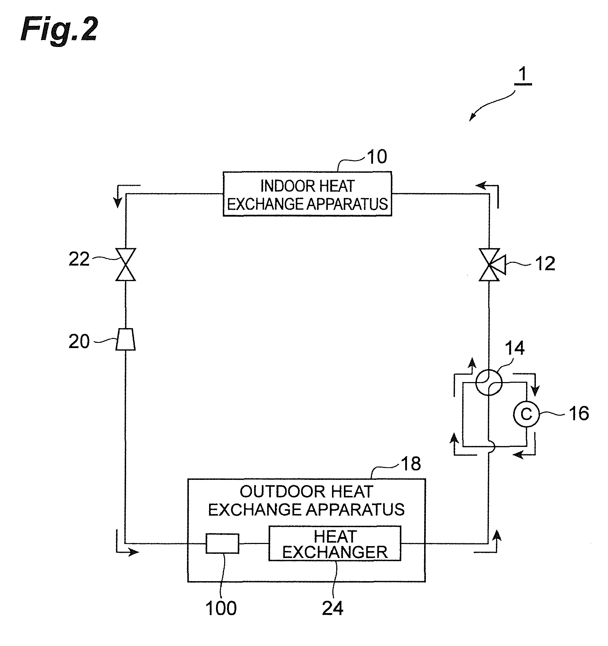

Referring to Fig. 2, the operation of the refrigeration/air-conditioning system 1 as the heating unit will be described. In this case, the heat exchanger of the indoor heat-exchange device 10 functions as the condenser, and the heat exchanger 24 of the outdoor heat-exchange device 18 functions as the evaporator.

The compressor 16 is operated to compress the refrigerant in the low temperature and low pressure dry vapor state so as to be changed into the high temperature and high pressure superheated vapor. Then the refrigerant in the superheated vapor state is subjected to the heat exchange with the outside system by the heat exchanger of the indoor heat-exchange device 10 and changed into the normal temperature and high pressure liquid.

The refrigerant in the normal temperature and high pressure liquid state is expanded by the capillary tube 20 into the low temperature and low pressure moist vapor. Then the refrigerant in the low temperature and low pressure moist vapor state is heated by the outdoor heat-exchange device 18, and changed into the low temperature and low pressure dry vapor.

The refrigerant flows through the compressor 16, the four-way valve 14, the three-way valve 12, the indoor heat-exchange device 10, the two-way valve 22, the capillary tube 20, the outdoor heat-exchange device 18 (heat exchanger 24, bubble-removal device 100) and the four-way valve 14 in this order, and circulates in the refrigeration/air-conditioning system 1. As the refrigerant circulates in the refrigeration/air-conditioning system 1 while being changed as described above, the temperature inside the room where the evaporator (indoor heat-exchange device 10) is installed is increased, and the temperature outside the room where the condenser (outdoor heat-exchange device 18) is installed is decreased.

In the aforementioned embodiment, the spiral groove 116 that spirally extends relative to the center axis is formed on the inner surface of the barrel part 110a. In the process where the liquid refrigerant that contains the vacuum bubbles flows while impinging against the spiral groove 116, break of the vacuum bubble is promoted, and the respective radicals are easily mixed with the liquid refrigerant. As a result, the vacuum bubbles that exist in the refrigerant may be decomposed and removed therefrom.

In the present embodiment, the spiral groove 116 extends across the full length of the barrel part 110a, and accordingly, the vacuum bubbles are expected to contact the spiral groove 116 for a prolonged time. This may further facilitate break of the vacuum bubbles and mixture with the refrigerant.

In the present embodiment, the spiral groove 116 is formed by the gap of neighboring metal wires of the cylindrical coil spring 110e. Use of the cylindrical coil spring 110e allows easy configuration of the spiral groove 116 at low cost.

In the present embodiment, the opening H1 (pipe part 112) does not face the opening H2 (pipe part 114) when they are seen from the center axis direction. Therefore, the refrigerant has difficulty in directly flowing from the opening H1 (pipe part 112) to the opening H2 (pipe part 114).

In the present embodiment, the spiral groove 118 that spirally extends relative to the center axis is formed on the outer peripheral surface of the pipe part 114. As the refrigerant flows in contact with the spiral groove 118, the swirling flow is generated further easily. Accordingly, the vacuum bubbles are likely to move outward, thus further facilitating break of the vacuum bubbles.

In the present embodiment, the spiral groove 116 is formed by a male screw. This makes it possible to configure the spiral groove 116 easily at low cost.

The refrigeration/air-conditioning system 1 according to the present embodiment may be configured by adding the bubble-removal device 100 to the existing refrigeration/air-conditioning system. The operation efficiency of the entire refrigeration/air-conditioning system 1 may be increased only by adding the bubble-removal device 100, thus significantly contributing to energy saving. There is no need of replacing the refrigerant in the existing refrigeration/air-conditioning system when adding the bubble-removal device 100.

The preferred embodiment of the present invention has been described in detail. The present invention is not limited to the aforementioned embodiment. In the present embodiment, for example, the spiral groove 116 is formed by the cylindrical coil spring 110e. The spiral groove may be directly formed on the inner wall surface of the tube 110d. The section of the groove may have a variety of shapes, for example, U-like shape, triangle shape, quadrilateral shape, and the other different shape.

In the present embodiment, the spiral groove 116 has the length substantially equal to the full length of the tube 110d. However, it is sufficient to form at least the spiral groove 116 on the inner surface of the barrel part 110a on the side of the opening H1 (pipe part 112) into which the refrigerant is introduced.

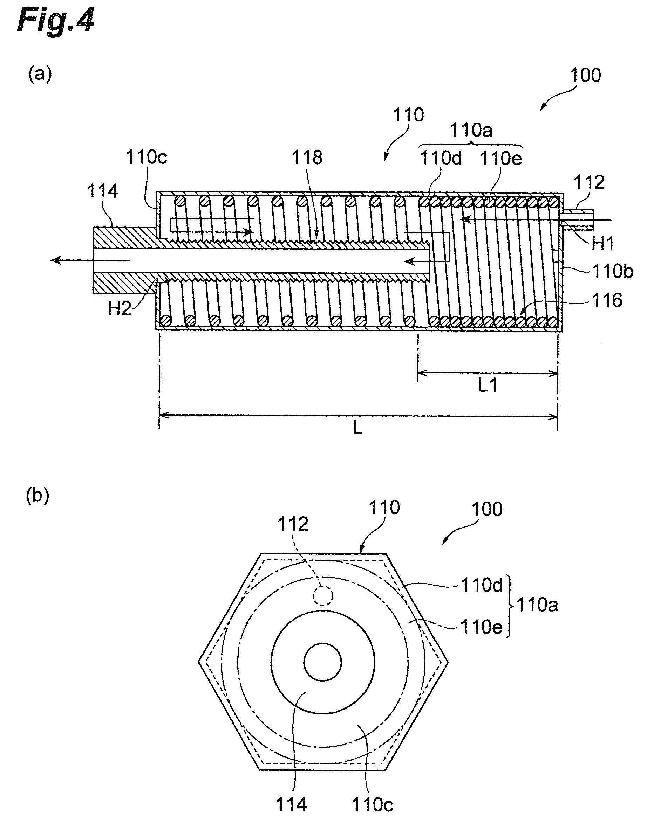

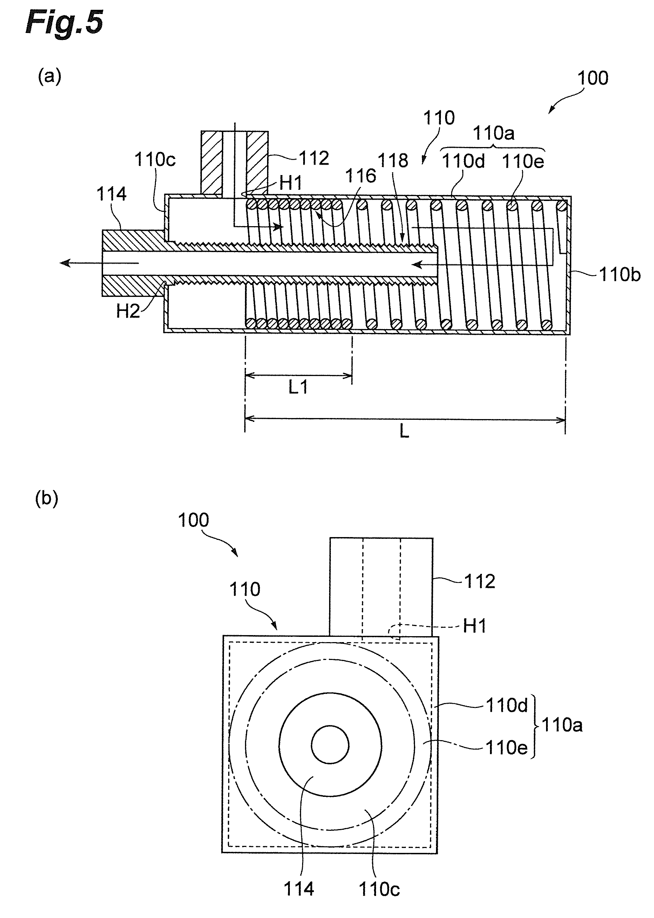

In the present embodiment, the tube 110d has a cylindrical shape. However, the tube 110d may have a multi-angular shape, for example, the hexagonal (see Fig. 4) or quadrilateral (see Fig. 5), an elliptical shape and the like.

In the present embodiment, the opening H1 communicated with the pipe part 112 is formed in the end wall part 110b. However, the opening H1 may be formed in the barrel body 110a or the end wall part 110c. As shown in Figs. 5, if the opening H1 is formed in the barrel part 110a at the position close to the end wall part 110c, the refrigerant flows toward the end wall part 110b, and then flows into the pipe part 114. Referring to Figs. 5, the cylindrical coil spring 110e extends from the opening H1 to the end wall part 110b. That is, the spiral groove 116 is formed on the inner surface of the barrel part 110a from the opening H1 to the end wall part 110b for the purpose of preventing closure of the opening H1 with the cylindrical coil spring 110e so as not to interrupt the refrigerant flow. Even if the opening H1 is formed in the barrel part 110a as shown in Figs. 5, it is possible to extend the cylindrical coil spring 110e across the full length of the barrel part 110a so long as the metal wires that configure the cylindrical coil spring 110e are spaced from each other around the opening H1 so that the refrigerant can flow. In the case where the opening H1 is formed in the barrel part 110a as shown in Figs. 5, L1/L ≥ 1/3 may hold where the length of the spiral groove 116 from the opening H1 to the end wall part 110b is L, and the length of a part of the spiral groove 116 on the side of the pipe part 112 where the pitch is narrower is L1. Alternatively, it is possible to hold 1/3 ≤ L1/L ≤ 2/3 or 1/3 ≤ L1/L ≤ 1/2.

According to the present embodiment, the section of the metal wire of the cylindrical coil spring 110e may employ a variety of shapes such as a circular shape and a rectangular shape.

In the present embodiment, the spiral groove 118 of the pipe part 114 is formed by the male screw. However, the spiral groove 118 may be formed by a gap of neighboring metal wires spirally wound around the outer peripheral surface of the pipe part 114. The pipe part 114 is not necessarily provided with the spiral groove 118.

Each pitch of the spiral grooves 116 and 118 may be constant or variable along the center axis direction.

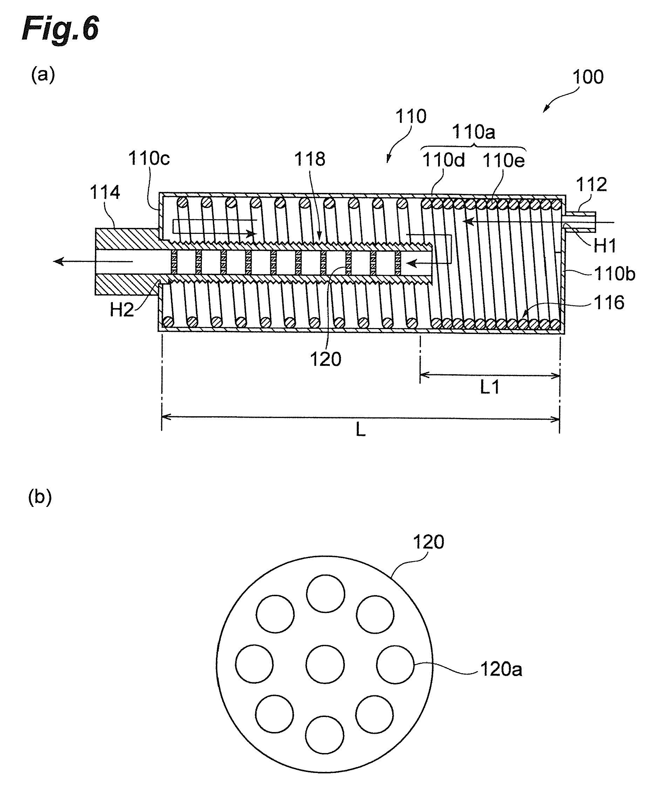

As shown in Fig. 6, a throttling member 120 is provided in the pipe part 114. Referring to an example shown in Fig. 6(a), 10 throttling members 120 each with a flat plate shape are provided in the pipe part 114. The number of the throttling members 120 in the pipe part 114 may be set to approximately 5 to 10, or at least 1.

The throttling member 120 may be arbitrarily configured so long as it provides the flow passage area smaller than that of the pipe part 114. The flow passage area provided by the throttling member 120 may be set so as not to exert the load to the compressor 16 located upstream of the throttling member 120, or the load is substantially negligible under the condition of increasing pressure at the upstream side due to the existence of the throttling member 120. The flow passage area provided by the throttling member 120 may be set to approximately 2/3 to 3/4 of the flow passage area provided by the pipe part 114. The shape of the throttling member 120 is not limited to the flat plate shape. It may employ a variety of shapes. If the throttling member 120 has the flat plate shape, at least one through-hole 120a (Fig. 6(b) shows 9 through-holes 120a) penetrating in the thickness direction may be formed as shown in Fig. 6(b).

The throttling member 120 serves to make the pressure at the downstream side lower than the one at the upstream side. Then the force from the refrigerant acting on an aggregation of the radicals formed as the vacuum bubble is made relatively low, and the vacuum bubble is likely to be decomposed. As a result, removal of the vacuum bubble from the refrigerant may further be promoted.

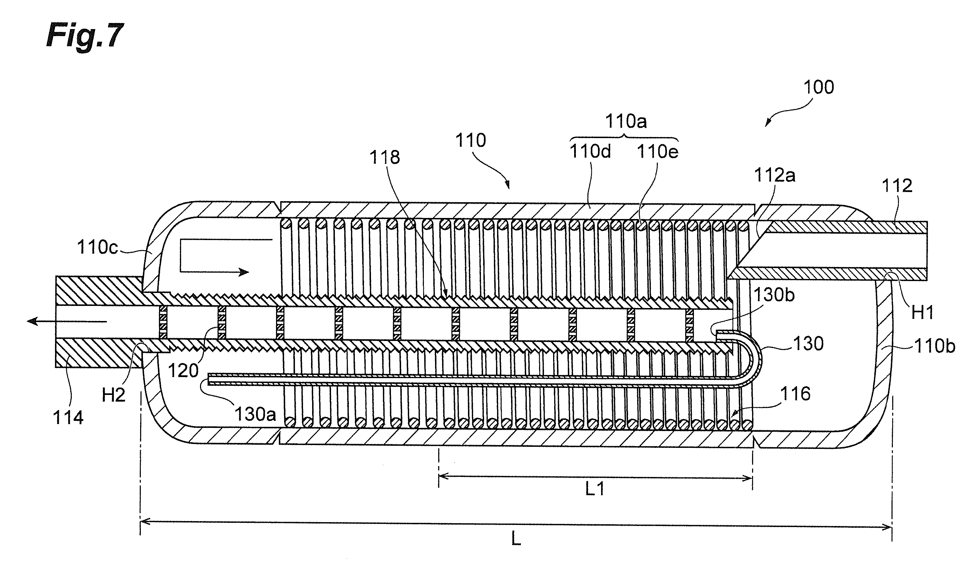

As shown in Fig. 7, a leading end 112a of the pipe part (inlet pipe part) 112 may be inclined obliquely with respect to the center axis of the pipe part 112. Specifically, the pipe part 112 is connected to the opening H1 of the end wall part 110b. The leading end 112a of the pipe part 112 is located inside the main body 110 (inside the barrel part 110a). The pipe part 112 is attached to the main body 110 so that the portion of the leading end 112a close to the barrel part 110a is shorter than the portion of the leading end 112a located on the center axis side of the barrel part 110a. In the example of Fig. 7, a portion of the leading end 112a close to the barrel part 110a is in contact with the inner surface of the barrel part 110a, but may not be in contact with the inner surface of the barrel part 110a. When configuring the pipe part 112 as described above, the leading end 112a of the pipe part 112 is directed toward the inner surface of the barrel part 110a. Therefore, the refrigerant flowing into the main body 110 from the leading end 112a of the pipe part 112 flows mainly toward the spiral groove 116. Accordingly, the swirling flow of the refrigerant is more likely to be formed inside the main body 110. As a result, it is possible to promote the decomposition and removal of the vacuum bubbles existing in the refrigerant.

As shown in Fig. 7, an auxiliary pipe part 130 disposed inside the main body 110 may be provided. Specifically, the auxiliary pipe part 130 is constituted by connection of a linear part extending in parallel along the pipe part 114 and a bent part which is bent in a U-shape. The one end (one end of the linear part) 130a of the auxiliary pipe part 130 is located near the end wall part 110c. The other end (one of the bent part) 130b of the auxiliary pipe part 130 is guided into the pipe part 114, is in contact with the inner surface of the pipe part 114, and is directed toward the leading end of the pipe part 114.

Incidentally, since the one end of the barrel part 110a is closed by the end wall part 110c, in the vicinity of the end wall part 110c, the refrigerant after the vacuum bubbles are decomposed and removed by the spiral groove 116, that is, the almost completely liquefied refrigerant is likely to be accumulated. In particular, in the example of Fig. 7, a cylindrical coil spring 110e exists in the central portion of the barrel part 110a, and the cylindrical coil spring 110e is not present in the vicinity of the end wall parts 110b and 110c. For that reason, the almost completely liquefied refrigerant is more likely to be accumulated in the vicinity of the end wall part 110c. Since the one end 130a of the auxiliary pipe part 130 is located near the end wall part 110c in which the liquid pool of the refrigerant occurs, and the other end 130b of the auxiliary pipe part 130 is directed toward the leading end of the pipe part 114, it is possible to cause the refrigerant becoming the liquid pool to directly flow into the pipe part 114 by the auxiliary pipe part 130. As a result, it is possible to cause the almost completely liquefied refrigerant to efficiently flow to the downstream side through the auxiliary pipe part 130 and the pipe part 114. In addition, in the example of Fig. 7, the cylindrical coil spring 110e is not present over the entire length of the barrel part 110a, but as in the example of Fig. 3, the cylindrical coil spring 110e may be present over the entire length of the barrel part 110a. In the example of Fig. 7, although a throttling member 120 is provided in the pipe part 114 as shown in the example of Fig. 6, the throttling member 120 may not be provided in the pipe part 114 as shown in the example of Fig. 3.

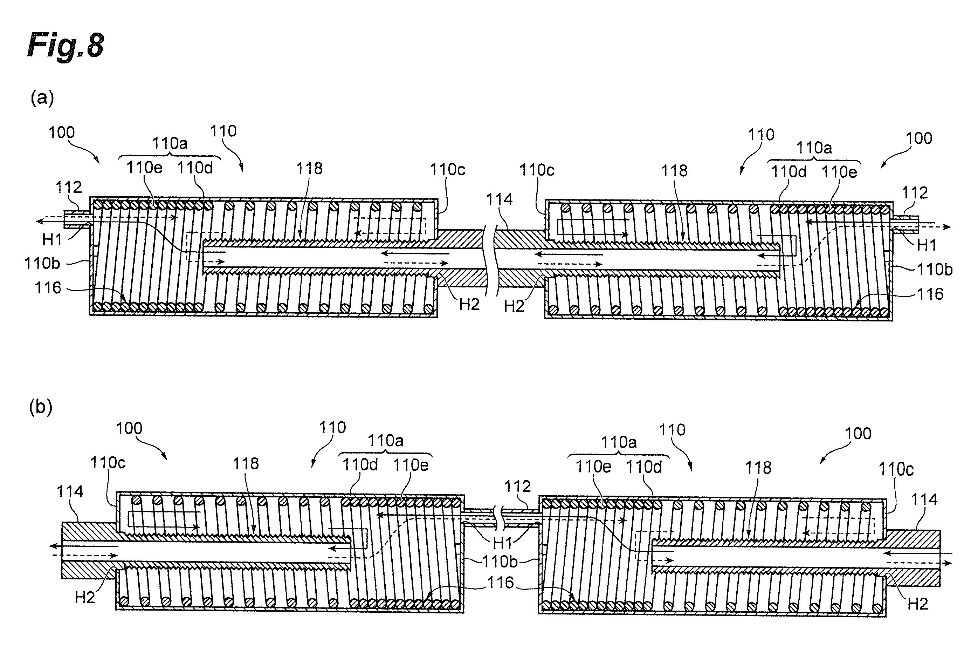

As shown in Fig. 8, the refrigeration/air-conditioning system 1 may be provided with two or more bubble-removal devices 100. Specifically, as shown in Fig. 8(a), the pipe part 114 (opening H2) of one bubble-removal device 100 may be in communication with the pipe part 114 (opening H2) of the other bubble-removal device 100. In this case, the two pipe parts 114 may be directly connected to each other, or may be indirectly connected to each other. Furthermore, specifically, as shown in Fig. 8(b), the pipe part 112 (opening H1) of one bubble-removal device 100 may be in communication with the pipe part 112 (opening H1) of the other bubble-removal device 100. In this case, the two pipe parts 112 may be directly connected to each other, or may be indirectly connected to each other. Incidentally, the expression "indirectly connected" means that another member may be interposed between the two bubble-removal devices 100 (for example, the heat exchanger 24).

### Example 1

The present invention will be described in more detail based on a first example and a first comparative example. However, the present invention is not limited to the following example.

### (First example)

The refrigeration/air-conditioning system 1 according to the present embodiment was prepared. As the indoor heat-exchange device 10, FZ285X manufactured by Daikin Industries, Ltd. was used. As the outdoor heat-exchange device 18, RAZ285XE manufactured by Daikin Industries, Ltd. was used. The refrigerant R-22 was used.

Then as shown in Fig. 1, the refrigeration/air-conditioning system 1 serving as the cooling apparatus was operated for 60 minutes under the following conditions. The indoor temperature and the outlet temperature of the indoor heat-exchange device measured 24°C for 18 minutes from start of the operation. The indoor relative humidity measured 55%RH for 30 minutes from start of the operation.
Indoor temperature: 26°C
Indoor relative humidity: 67% RH
Outdoor temperature: 28.5°C
Outlet temperature of the indoor heat-exchange device: 24°C

After the operation, the pressure at the inlet side of the compressor 16 (on the side of the indoor heat-exchange device) and the pressure at the outlet side of the compressor 16 (on the side of the outdoor heat-exchange device) were measured to obtain the following measurement results. Power consumption of the compressor 16 was measured by a measuring instrument (watt checker (wattmeter) DW-777 manufactured by Edenski) to obtain the following measurement results.
Pressure at the inlet side of the compressor (on the side of the indoor heat-exchange device): 0.29 MPa
Pressure at the outlet side of the compressor (on the side of the outdoor heat-exchange device): 1.44 MPa
Power consumption of the compressor: 920 W

After the operation, the refrigerant at the outlet of the outdoor heat-exchange device 18 was fed to a heat-resistant glass level gauge, and illuminated by an LED (light-emitting diode) for visually checking the bubble in the refrigerant. No bubble was confirmed.

### (First comparative example)

The same refrigeration/air-conditioning system as the one described in the first example except that the bubble-removal device 100 is not provided was prepared. The refrigeration/air-conditioning system serving as the cooling apparatus was operated for 60 minutes under the same conditions as those of the first example. The indoor temperature and temperature at the outlet of the indoor heat-exchange device measured 24°C for 22 minutes from start of the operation.

After the operation, the pressure at the inlet side of the compressor (on the side of the indoor heat-exchange device), the pressure at the outlet side of the compressor (on the side of the outdoor heat-exchange device), and power consumption of the compressor were measured to obtain the following measurement results.
Pressure at the inlet side of the compressor (on the side of the indoor heat-exchange device): 0.37 MPa
Pressure at the outlet side of the compressor (on the side of the outdoor heat-exchange device): 1.81 MPa
Power consumption of the compressor: 1310 W

After the operation, the refrigerant at the outlet of the outdoor heat-exchange device was fed to the heat-resistant glass level gauge, and illuminated by the LED (light-emitting diode) for visually checking the bubble in the refrigerant. The gaseous phase by approximately 25% was confirmed.

### (Result)

As described above, the measurement results of the first example indicate that the low pressure operation is maintained, the refrigerant is likely to be liquefied, and the indoor air conditioning capability is improved compared to those obtained by the first comparative example. Compared to the first comparative example, the first example reduces the power consumption of the compressor by approximately 29.8%, indicating significant contribution to the energy saving.

### Example 2

The present invention will be described based on a second example and a second comparative example in more detail. However, the present invention is not limited to the following example.

### (Second example)

The refrigeration/air-conditioning system 1 according to the present embodiment was prepared. As the indoor heat-exchange device 10, FZ285X manufactured by Daikin Industries, Ltd. was used. As the outdoor heat-exchange device 18, RAZ285XE manufactured by Daikin Industries, Ltd. was used. The refrigerant R-22 was used.

Then as shown in Fig. 2, the refrigeration/air-conditioning system 1 serving as the heating apparatus was operated for 60 minutes under the following conditions as specified in JIS C9612.
Indoor temperature: 20°C
Indoor relative humidity: 54% RH
Outdoor temperature: 7°C

After the operation, the pressure at the inlet side of the compressor 16 (on the side of the indoor heat-exchange device) and the pressure at the outlet side of the compressor 16 (on the side of the outdoor heat-exchange device) were measured to obtain the following measurement results. Power consumption of the compressor 16 was measured by the measuring instrument (watt checker (wattmeter) DW-777 manufactured by Edenski) to obtain the following measurement results.
Pressure at the inlet side of the compressor (on the side of the indoor heat-exchange device): 0.29 MPa
Pressure at the outlet side of the compressor (on the side of the outdoor heat-exchange device): 1.44 MPa
Power consumption of the compressor: 960 W

After the operation, the refrigerant at the outlet of the outdoor heat-exchange device 18 was fed to the heat-resistant glass level gauge, and illuminated by the LED (light-emitting diode) for visually checking the bubble in the refrigerant. No bubble was observed.

### (Second comparative example)

The same refrigeration/air-conditioning system as the one described in the second example except that the bubble-removal device 100 is not provided was prepared. The refrigeration/air-conditioning system serving as the heating apparatus was operated for 60 minutes under the same conditions as those of the present embodiment.

After the operation, the pressure at the inlet side of the compressor (on the side of the indoor heat-exchange device), the pressure at the outlet side of the compressor (on the side of the outdoor heat-exchange device), and power consumption of the compressor were measured to obtain the following measurement results.
Pressure at the inlet side of the compressor (on the side of the indoor heat-exchange device): 0.45 MPa
Pressure at the outlet side of the compressor (on the side of the outdoor heat-exchange device): 1.70 MPa
Power consumption of the compressor: 1590 W

After the operation, the refrigerant at the outlet of the outdoor heat-exchange device was fed to the heat-resistant glass level gauge, and illuminated by the LED (light-emitting diode) for visually checking the bubble in the refrigerant. The gaseous phase by approximately 15% was confirmed.

### (Result)

As described above, the measurement results of the second example indicate that the low pressure operation is maintained, the refrigerant is likely to be liquefied, and the indoor heating capability is improved compared to those obtained by the second comparative example. Compared to the second comparative example, the second example reduces the power consumption of the compressor by approximately 39.6% to confirm significant contribution to the energy saving.

### Reference Signs List

- 1: refrigeration/air-conditioning system
- 10: indoor heat-exchange device
- 16: compressor
- 18: outdoor heat-exchange device
- 24: heat exchanger
- 100: bubble-removal device
- 110: main body
- 110a: barrel part
- 110b, 110c: end wall part
- 110d: cylindrical tube
- 110e: cylindrical coil spring
- 112, 114: pipe part
- 116, 118: spiral groove
- 120: throttling member
- 120a: through-hole
- 130: auxiliary pipe part
- H1, H2: opening

## Claims

1. A bubble-removal device comprising:
a main body having a cylindrical barrel part and a first and a second end wall part that close both end parts of the barrel part; and
a pipe part extending along a center axis of the barrel part, one end side of which is attached to the first end wall part, and the other end side of which is located inside the main body and extends toward the second end wall part, wherein
in the main body, an opening to introduce a liquid refrigerant is formed, and
an inner surface of the barrel part is spaced from an outer peripheral surface of the pipe part so as to configure a refrigerant flow passage, has a first spiral groove extending spirally relative to the center axis at least on the opening side, and exhibits an irregular surface on which projections and depressions are arranged side by side along the flow passage due to the presence of the first spiral groove.

2. The bubble-removal device according to claim 1, wherein the inner surface of the barrel part has the first spiral groove extending spirally relative to the center axis across the full length of the barrel part.

3. The bubble-removal device according to claim 2, wherein a pitch of the first spiral groove on the opening side is narrower than a pitch of the first spiral groove on a side distant from the opening.

4. The bubble-removal device according to claim 3, wherein L1/L ≥ 1/3 holds where a full width of the first spiral groove in the center axis direction is L and a width of a part of the first spiral groove on the opening side where the pitch is narrower is L1.

5. The bubble-removal device according to any one of claims 1 to 4, wherein
the barrel part includes a cylindrical coil spring attached to an inner wall surface of the barrel part, and
the first spiral groove is formed by a gap of neighboring metal wires of the cylindrical coil spring.

6. The bubble-removal device according to claim 5, wherein
a section of the metal wire is circular, and
a diameter of the metal wire is 2 mm to 6 mm.

7. The bubble-removal device according to any one of claims **1** to 6, wherein the opening does not face the one end of the pipe part.

8. The bubble-removal device according to claim 7, wherein
the opening is formed on an outer peripheral edge side of the second end wall part,
the pipe part is located on the center axis, and
the refrigerant introduced through the opening flows along an inner peripheral surface of the barrel part, then flows along the outer peripheral surface of the pipe part with a direction of the flow reversed by the first end wall part, and thereafter flows out to the outside through the other end of the pipe part.

9. The bubble-removal device according to claim 7, wherein the opening is formed on the barrel part at the first end wall part side,
the pipe part is located on the center axis, and
the refrigerant introduced through the opening flows between the inner peripheral surface of the barrel part and the outer peripheral surface of the pipe part and flows out to the outside through the other end of the pipe part after the direction of the flow is reversed by the second end wall part.

10. The bubble-removal device according to any one of claims 7 to 9, further comprising:
an inlet pipe part that is connected to the opening and has one end located inside the main body,
wherein the one end is inclined obliquely with respect to the axis of the inlet pipe part, and a portion of the one end close to the barrel part is shorter than a portion of the one end located on the center axis side of the barrel part.

11. The bubble-removal device according to any one of claims 1 to 10, wherein the outer peripheral surface of the pipe part has a second spiral groove extending spirally relative to the center axis.

12. The bubble-removal device according to claim 11, wherein the second spiral groove is formed by a male screw.

13. The bubble-removal device according to any one of claims 1 to 12, wherein at least one throttling member having a flow passage area smaller than a flow passage area of the pipe part is provided inside the pipe part.

14. The bubble-removal device according to claim 13, wherein the throttling member is a flat plate having at least one through-hole penetrating in a thickness direction.

15. The bubble-removal device according to any one of claims 1 to 14, further comprising:
an auxiliary pipe part that is disposed inside the main body so that one end is located near the first end wall part and the other end is directed toward the other end of the pipe part.

16. An outdoor heat-exchange device comprising:
a heat exchanger that performs heat exchange between an outside system and a refrigerant; and
the bubble-removal device according to any one of claims 1 to 15, wherein
a refrigerant flows in and out between the heat exchanger and the bubble-removal device.

17. The outdoor heat-exchange device according to claim 16, including a plurality of the bubble-removal devices,
wherein the pipe part of the first bubble-removal device of the plurality of bubble-removal devices is in communication with the pipe part of the second bubble-removal device of the plurality of bubble-removal devices, or the opening of the first bubble-removal device is in communication with the opening of the second bubble-removal device.

18. An outdoor heat-exchange device comprising:
a heat exchange part that performs heat exchange between an outside system and a refrigerant; and
a bubble removing part between which and the heat exchange part a refrigerant flows in and out, wherein
the bubble removing part has:
a main body having a cylindrical barrel part and a first and a second end wall part that close both end parts of the barrel part; and
a pipe part extending along a center axis of the barrel part, one end side of which is attached to the first end wall part, and the other end side of which is located inside the main body and extends toward the second end wall part, wherein
in the main body, an opening to introduce a liquid refrigerant is formed, and
an inner surface of the barrel part is spaced from an outer peripheral surface of the pipe part so as to configure a refrigerant flow passage, has a first spiral groove extending spirally relative to the center axis at least on the opening side, and exhibits an irregular surface on which projections and depressions are arranged side by side along the flow passage due to the presence of the first spiral groove.

19. The outdoor heat-exchange device according to claim 18, wherein the inner surface of the barrel part has the first spiral groove extending spirally relative to the center axis across the full length of the barrel part.

20. The outdoor heat-exchange device according to claim 19, wherein a pitch of the first spiral groove on the opening side is narrower than a pitch of the first spiral groove on a side distant from the opening.

21. The outdoor heat-exchange device according to claim 20, wherein L1/L ≥ 1/3 holds where a full width of the first spiral groove in the center axis direction is L and a width of a part of the first spiral groove on the opening side where the pitch is narrower is L1.

22. The outdoor heat-exchange device according to any one of claims 18 to 21, wherein
the barrel part includes a cylindrical coil spring attached to an inner wall surface of the barrel part, and
the first spiral groove is formed by a gap of neighboring metal wires of the cylindrical coil spring.

23. The outdoor heat-exchange device according to claim 22, wherein
a section of the metal wire is circular, and
a diameter of the metal wire is 2 mm to 6 mm.

24. The outdoor heat-exchange device according to any one of claims 18 to 23, wherein the opening does not face the one end of the pipe part.

25. The outdoor heat-exchange device according to claim 24, wherein
the opening is formed on an outer peripheral edge side of the second end wall part,
the pipe part is located on the center axis, and
the refrigerant introduced through the opening flows along an inner peripheral surface of the barrel part, then flows along the outer peripheral surface of the pipe part with a direction of the flow reversed by the first end wall part, and thereafter flows out to the outside through the other end of the pipe part.

26. The outdoor heat-exchange device according to claim 24, wherein
the opening is formed on the barrel part at the first end wall part side,
the pipe part is located on the center axis, and
the refrigerant introduced through the opening flows between the inner peripheral surface of the barrel part and the outer peripheral surface of the pipe part and flows out to the outside through the other end of the pipe part after the direction of the flow is reversed by the second end wall part.

27. The outdoor heat-exchange device according to any one of claims 24 to 26, wherein the bubble removing part is further provided with an inlet pipe part that is connected to the opening and has one end located inside the main body,
the one end is inclined obliquely with respect to the axis of the inlet pipe part, and
a portion of the one end close to the barrel part is shorter than a portion of the one end located on the center axis side of the barrel part.

28. The outdoor heat-exchange device according to any one of claims 18 to 27, wherein the outer peripheral surface of the pipe part has a second spiral groove extending spirally relative to the center axis.

29. The outdoor heat-exchange device according to claim 28, wherein the second spiral groove is formed by a male screw.

30. The outdoor heat-exchange device according to any one of claims 18 to 29, wherein at least one throttling member having a flow passage area smaller than a flow passage area of the pipe part is provided inside the pipe part.

31. The outdoor heat-exchange device according to claim 30, wherein the throttling member is a flat plate having at least one through-hole penetrating in a thickness direction.

32. The outdoor heat-exchange device according to any one of claims 18 to 31,
wherein the bubble removing part is further provided with an auxiliary pipe part that is disposed inside the main body so that one end is located near the first end wall part and the other end is directed toward the other end of the pipe part.

33. The outdoor heat-exchange device according to any one of claims 18 to 32, including a plurality of the bubble-removal parts,
wherein the pipe part of the first bubble removing part of the plurality of bubble-removal parts is in communication with the pipe part of the second bubble removing part of the plurality of bubble-removal parts, or the opening of the first bubble removing part is in communication with the opening of the second bubble removing part.

34. A refrigeration/air-conditioning system in which a closed system through which a refrigerant circulates is configured by connecting an indoor heat-exchange device, a compressor, the outdoor heat-exchange device according to any one of claims 16 to 33, and an expansion device in this order by piping.
